# EUROPEAN PATENT APPLICATION

(11) **EP 3 270 213 A1**
(43) Date of publication of application: **17.01.2018**
(21) Application number: 16764893.0
(22) Date of filing: 11.03.2016
(51) Int. Cl.: G02C 7/10, G02B 5/23, G02C 7/12

(54) **EYEGLASS LENS AND EYEGLASSES**

(30) Priority: 13.03.2015 JP 2015050364
(71) Applicant: Hoya Lens Thailand Ltd., Pathumthani 12130 (TH)
(72) Inventor: GOTO Takumi, Tokyo 161-8525 (JP); YAMAMOTO Kakuya, Tokyo 161-8525 (JP); MASUDA Seiichi, Tokyo 161-8525 (JP); SHIMIZU Hidetaka, Tokyo 161-8525 (JP); OHNISHI Tomofumi, Tokyo 161-8525 (JP)
(74) Representative: Hoffmann Eitle
(86) International application number: PCT/JP2016/057776
(87) International publication number: WO 2016/148063

(57) **Abstract**

Provided is a spectacle lens having, on at least one side of a lens substrate, a polarizing layer containing a dichromic pigment, and a photochromic layer containing a photochromic pigment, and having the polarizing layer and the photochromic layer via an intermediate layer.

## Description

### Cross-Reference to Related Applications

The present application claims priority of Japanese Patent Application No. 2015-50364 filed on March 13, 2015, and the entire description of which is herein specifically incorporated by reference as a disclosure.

### Technical Field

The present invention relates to a spectacle lens, and spectacles to which the spectacle lenses have been attached.

### Background Art

For example, JP 2010-256895 A (the entire description of which is herein specifically incorporated by reference as a disclosure) discloses that a polarizing layer containing a dichromic pigment is disposed on a lens substrate.

### Summary of Invention

As mentioned above, by preparing a spectacle lens by providing a polarizing layer, an antiglare property can be imparted to the spectacle lens by utilizing the polarizing property of the dichromic pigment. Furthermore, according to the spectacles having such spectacle lenses, the glare felt by a person who wears the spectacles can be decreased.

On the other hand, paragraph 0044 of JP 2010-256895 A exemplifies a photochromic film as functional film 8 in the constitution indicated in Fig. 1 (E) of JP 2010-256895 A. The pigment protective film indicated in this drawing is integrated with a polarizing layer, as described in paragraph 0043 of JP 2010-256895 A. Therefore, in the description of the present application, in the aspects wherein a pigment protective film is formed, the pigment protective film is also deemed as a part of a polarizing layer. That is, JP 2010-256895 A exemplifies the photochromic film as the functional film 8 adjacent to the polarizing layer. According to the photochromic film (photochromic layer), the photochromic pigment included in the photochromic layer respond to light to cause color development and color fading, whereby a property to develop a color bright outdoors to exert a similar antiglare property to that of a color lens and to restore light transmittance by color fading when the lens is brought into indoors can be imparted to the spectacle lens.

As mentioned above, either of the polarizing layer and the photochromic layer is an effective layer for imparting an antiglare property to a spectacle lens. Therefore, when the present inventors tried to obtain a spectacle lens having a polarizing layer and a photochromic layer, it was newly proved that peeling (adhesion failure) occurs at the interface between the polarizing layer and the photochromic layer, and thus the spectacle lens has poor durability.

An aspect of the present invention provides a spectacle lens that has a polarizing layer and a photochromic layer in combination, and is excellent in durability.

An aspect of the present invention relates to a spectacle lens including, on at least one side of a lens substrate:
a polarizing layer containing a dichromic pigment; and
a photochromic layer containing a photochromic pigment, via an intermediate layer.

The present inventors consider that the cause of the above-mentioned adhesion failure may be the effect of the component contained in either of the photochromic layer and the polarizing layer on the other layer. On the other hand, the present inventors conjecture that the effect of the component in one layer on the other layer can be alleviated or prevented by disposing these layers via an intermediate layer so that they are not adjacent, and this can contribute to the prevention of the peeling of these layers. However, the above-mentioned description is merely a conjecture by the present inventors, and thus the present invention is not limited at all by the above-mentioned description.

In an aspect, the intermediate layer is an aqueous resin layer.

In an aspect, the aqueous resin layer is an aqueous polyurethane resin layer.

In an aspect, the above-mentioned spectacle lens has, on the lens substrate, the polarizing layer, the intermediate layer and the photochromic layer in this order from the side of the lens substrate.

In an aspect, the above-mentioned spectacle lens further has a functional layer on the side opposite to the intermediate layer of the photochromic layer.

In an aspect, the above-mentioned spectacle lens further has an array layer containing a silicon oxide between the lens substrate and the polarizing layer.

In an aspect, at least one of the photochromic layer and the functional layer contains a piperidine ring-containing compound. In an aspect, the piperidine ring-containing compound is a hindered amine.

In an aspect, the surface at the side of the intermediate layer of the polarizing layer is a surface that has undergone a treatment with a silane coupling agent.

In an aspect, the treatment with a silane coupling agent is at least one treatment selected from the group consisting of an epoxysilane treatment and an aminosilane treatment.

In an aspect, the surface on which the polarizing layer and photochromic layer are disposed of the lens substrate is a convex surface.

A further aspect of the present invention relates to spectacles having the above-mentioned spectacle lenses and a frame to which the spectacle lenses have been attached.

A further aspect of the present invention relates to a method for producing a spectacle lens, including:
a step of forming a polarizing layer by applying an aqueous coating solution containing a dichromic pigment for forming a polarizing layer onto a lens substrate, and subjecting the coating solution to a drying treatment;
a step of forming an intermediate layer on the polarizing layer; and
a step of forming a photochromic layer by applying a curable composition containing a photochromic pigment for forming a photochromic layer onto the intermediate layer, and subjecting this composition to a curing treatment.

In an aspect, the intermediate layer is formed by applying an aqueous resin composition containing an aqueous resin and subjecting the aqueous resin composition to a drying treatment.

In an aspect, the aqueous resin contained in the above-mentioned aqueous resin composition is an aqueous polyurethane resin.

In an aspect, the above-mentioned production method further includes a step of forming an array layer containing a silicon oxide on the lens substrate, and the polarizing layer is formed on the formed array layer.

In an aspect, the above-mentioned production method further includes a step of forming a functional layer by applying a composition for forming a functional layer on the above-mentioned photochromic layer.

In an aspect, at least one of the above-mentioned curable composition for forming a photochromic layer and one or more kind of compositions for forming a functional layer contains a piperidine ring-containing compound. In an aspect, the piperidine ring-containing compound is contained in the above-mentioned curable composition for forming a photochromic layer. Furthermore, in an aspect, the piperidine ring-containing compound is a hindered amine.

In an aspect, the above-mentioned production method further includes a step of subjecting the surface of the formed polarizing layer to a treatment with a silane coupling agent after the step for forming the polarizing layer, in which the intermediate layer is formed on the surface of the polarizing layer that has been subjected to the treatment with a silane coupling agent. In an aspect, the treatment with a silane coupling agent is at least one treatment selected from the group consisting of an epoxysilane treatment and an aminosilane treatment.

In an aspect, the above-mentioned step is conducted on a convex surface of the lens substrate.

According to an aspect of the present invention, a spectacle lens having a polarizing layer and a photochromic layer in combination, and being excellent in durability (specifically, the peeling between the polarizing layer and the photochromic layer has been decreased or prevented) can be provided.

### Description of Embodiments

The spectacle lens of the present invention is a spectacle lens having, on at least one side of a lens substrate, a polarizing layer containing a dichromic pigment, and a photochromic layer containing a photochromic pigment, and having the polarizing layer and the photochromic layer via an intermediate layer.

The above-mentioned spectacle lens will further be explained in detail below.

### [Spectacle lens and production method therefor]

### <Order of lamination>

In the spectacle lens of the present invention, the order of lamination is not specifically limited as long as the spectacle lens has the polarizing layer and the photochromic layer on the lens substrate via the intermediate layer. In an aspect, the polarizing layer is included as a layer closer to the lens substrate, i.e., the lens substrate, the polarizing layer, the intermediate layer and the photochromic layer are included in this order in the spectacle lens. Furthermore, in another aspect, the photochromic layer is included as a layer closer to the lens substrate, i.e., the lens substrate, the photochromic layer, the intermediate layer and the polarizing layer are included in this order in the spectacle lens. In view of the color development and the response velocity of color fading of the photochromic layer, it is preferable that the photochromic layer is incorporated as a layer closer to the side of an object (side of incidence of light). From this point, the former aspect (the lens substrate, the polarizing layer, the intermediate layer and the photochromic layer are included in this order from the lens substrate side in the spectacle lens) is preferable. The above-mentioned layers may be present on at least one side of a lens substrate, and may present on only one surface side or both surface sides. The polarizing layer and the photochromic layer can exert sufficient functions by being present on only one surface side of the lens substrate.

### <Lens substrate>

As the lens substrate, various lens substrates that are generally used for spectacle lenses such as plastic lens substrates and glass lens substrates can be used without any limitation. In view of light weight and difficulty in cracking and the like, the lens substrate is preferably a plastic lens substrate. Specific examples can include, but are not limited to, starting with (meth)acryl resins, styrene resins, polycarbonate resins, allyl resins, allyl carbonate resins such as diethylene glycol bisallyl carbonate resin (CR-39), vinyl resins, polyester resins, polyether resins, urethane resins obtained by a reaction of an isocyanate compound with a hydroxy compound such as diethylene glycol, thiourethane resins obtained by a reaction of an isocyanate compound with a polythiol compound, transparent resins obtained by curing a polymerizable composition containing a (thio)epoxy compound having one or more disulfide bond(s) in the molecule, and the like, as the resins that constitute the plastic lens substrate. As the lens substrate, a lens that has not been colored (a colorless lens) may be used, or a colored lens (a colored lens) may be used. The lens substrate has a refractive index of, for example, about 1.60 to 1.75. However, the refractive index of the lens substrate is not limited to this, and may be either within the above-mentioned range or apart from upward or downward from the above-mentioned range.

The above-mentioned spectacle lens can be various lenses such as a single vision lens, a multifocal lens and a progressive power lens. The kind of the lens is determined by the planar shapes of the both surfaces of the lens substrate. Furthermore, the surface of the lens substrate may have either of a convex surface, a concave surface and a planar surface. In general lens substrate and spectacle lens, the surface at the object side of is a convex surface, and the eyeball-side surface has a concave surface. However, the present invention is not limited to this. The surface on which the polarizing layer and the photochromic layer are disposed, which will be mentioned below in detail, is preferably the convex surface of the lens substrate, from the viewpoint that the polarizing property from the polarizing layer is exerted more finely.

The polarizing layer or photochromic layer (the polarizing layer is preferable for the above-mentioned reason) is formed on the lens substrate, directly or indirectly via other layer. As an example of other layer formed here, for example, a hard coat layer can be exemplified. By disposing the hard coat layer, a scratch-proof property (scratch resistance) can be imparted to the spectacle lens, and the durability (strength) of the spectacle lens can also be enhanced. Regarding the details of the hard coat layer, for example, paragraphs 0025 to 0028 and 0030 of JP 2012-128135 A (the entire description of which is herein specifically incorporated by reference as a disclosure) can be referred to. Furthermore, the description relating to the hard coat layer, which will be mentioned below, can also be referred to. There is also a commercially available lens substrate with a hard coat layer, and such lens substrate may also be used in the present invention. Furthermore, as the above-mentioned other layer, an array layer, which will be mentioned below, can also be exemplified.

### <Polarizing layer>

Subsequently, the polarizing layer will be explained. In the above-mentioned spectacle lens, the polarizing layer may be incorporated as a layer closer to the lens substrate with respect to the photochromic layer, or may be incorporated as a farther layer. Hereinafter, a spectacle lens having, on a lens substrate, a polarizing layer, an intermediate layer and a photochromic layer in this order will be explained as an example. However, as described previously, the above-mentioned order of lamination of the layers is not limited.

The polarizing layer contains at least a dichromic pigment. The polarizing property of the dichromic pigment is generally expressed mainly by the monoaxial orientation of the dichromic pigment. In order to allow the monoaxial orientation of the dichromic pigment, it is preferable to apply a coating liquid containing the dichromic pigment onto a surface with grooves. The grooves for allowing the monoaxial orientation of the dichromic pigment may be formed on the surface of the lens substrate, and it is preferable to form the grooves on the surface of the array layer disposed on the lens substrate from the viewpoint that the polarizing property of the dichromic pigment is expressed better.

### (Array layer)

The array layer is generally disposed on the surface of the lens substrate, directly or indirectly via other layer. As an example of the layer disposed between the lens substrate and the array layer, the hard coat layer as previously described can be exemplified. The thickness of the array layer is generally about 0.02 to 5 µm, preferably about 0.05 to 0.5 µm. The array layer may also be formed by depositing a film-forming material by a known film forming process such as deposition or sputtering, or may also be formed by a known coating process such as a dip process or a spin coating process. Preferable examples of the materials as the above-mentioned film-forming material can include metals and semi-metals, or oxides, composites or compounds thereof. More preferably, materials selected from Si, Al, Zr, Ti, Ge, Sn, In, Zn, Sb, Ta, Nb, V, Y and Cr, or oxides thereof, further, composites or compounds of these materials can be used. Among these, silicon oxides such as SiO and SiO₂ are preferable in view of the easiness of imparting of a function as an array layer, of which SiO₂ is preferable from the point of reactivity with the silane coupling agent mentioned below. On the other hand, as the array layer formed by the coating process, a sol-gel film containing an inorganic oxide sol can be exemplified. As an example of the coating liquid preferable for the formation of the above-mentioned sol-gel film, for example, the array layer coat liquid described in JP 2010-256895 A can be exemplified.

Secondly, in order to allow the monoaxial orientation of the coating liquid applied onto the above-mentioned array layer, grooves are generally formed on the formed array layer. When the coating liquid containing the dichromic pigment is applied onto the surface on which the grooves have been formed of the array layer, the dichromic pigment is oriented along the grooves, or is oriented in the direction orthogonal to the grooves. By this way, the dichromic pigment is monoaxially oriented, whereby the polarizing property of the dichromic pigment can be finely expressed. The above-mentioned grooves can be formed, for example, a rubbing step, which is conducted for an orientation treatment of liquid crystal molecules. The rubbing step is a step of rubbing a surface to be polished with a cloth or the like in a predetermined direction, and regarding the details thereof, for example, US 2400877 B, US 4865668 B and the like can be referred to. Alternatively, it is also possible to form grooves on the array layer by the polishing treatment described in paragraphs 0033 to 0034 of JP 2009-237361 A. The depth and pitch of the formed grooves may be preset so that the monoaxial orientation of the dichromic pigment can be attained. The entire description of the above-mentioned publication is herein specifically incorporated by reference as a disclosure.

### (Dichromic pigment)

"Dichromic" means a property that a medium has an anisotropic property of selective absorption against light, and thus the color of the transmitted light differs depending on the direction of propagation, and a dichromic pigment has a property that light is intensely absorbed in a certain specific direction of pigment molecules against polarized light, whereas light absorption is small in the direction orthogonal to this direction. Furthermore, among dichromic pigments, those express a liquid crystal state in certain ranges of concentration and temperature when water is used as a solvent are known. Such liquid crystal state is referred to as a lyotropic liquid crystal. If the pigment molecules can be arrayed in a specific one direction by utilizing this liquid crystal state of the dichromic pigment, then it becomes possible to express a more intense dichromic property. By applying a coating liquid containing the dichromic pigment on the surface on which the above-mentioned grooves have been formed, the dichromic pigment can be monoaxially oriented, whereby a polarizing film having a fine polarizing property can be formed. The dichromic pigment is not specifically limited, and various dichromic pigments that are generally used in polarizing elements such as polarizing lenses can be exemplified. Specific examples include azo-based, anthraquinone-based, merocyanine-based, styryl-based, azomethine-based, quinone-based, quinophthalone-based, perylene-based, indigo-based, tetrazine-based, stilbene-based and benzidine-based pigments, and the like. Alternatively, the pigments may be those described in US 2400877 A and JP 2002-527786 A, and the like. The entire descriptions of the above-mentioned publications are herein specifically incorporated by reference as disclosures.

Since many dichromic pigments are water-soluble, it is preferable that the polarizing layer is formed by applying an aqueous coating solution containing a dichromic pigment for forming a polarizing layer onto a surface to be coated such as the surface of the above-mentioned array layer, and subjecting the aqueous coating solution to a drying treatment. The aqueous coating solution for forming an aqueous coating solution can be a solution or a suspension liquid, and the content of the dichromic pigment in the coating liquid is, for example, about 1 to 50% by mass, but the content is not limited to the above-mentioned range as long as a desired polarizing property can be obtained.

The aqueous coating solution for forming a polarizing layer can contain other components in addition to the dichromic pigment. Examples of the other components can include pigments other than the dichromic pigments, and by incorporating such pigments, a polarizing layer having a desired hue can be formed. Furthermore, from the viewpoint of improvement of coating property, additives such as a rheology modifier, an adhesion promoter, a plasticizer and a levelling agent may also be incorporated as necessary.

The method for applying the coating liquid is not specifically limited, and examples include known methods such as a dipping process and a spin coating process . The polarizing layer has a thickness of generally about 0.05 to 5 µm, but the thickness is not specifically limited. As described about the pigment protective film described in Patent Literature 1, the silane coupling agent mentioned below generally permeates into the polarizing layer, and thus is substantially contained in the polarizing layer.

### (Water-insolubilization treatment)

In the case when a water-soluble pigment is used as the dichromic pigment, in order to coating stability, it is preferable to conduct a water-insolubilization treatment after the coating liquid is applied and the drying treatment is conducted. The water-insolubilization treatment can be conducted by, for example, ion-exchanging terminal hydroxyl groups of the pigment molecules, or creating a chelate state between the pigment and metal ions. For this purpose, it is preferable to use a method for immersing the formed polarizing layer in an aqueous metal salt solution. The metal salt is not specifically limited, and examples can include AlCl₃, BaCl₂, CdCl₂, ZnCl₂, FeCl₂ and SnCl₃ and the like. It is also preferable to further dry the surface of the polarizing layer after the water-insolubilization treatment.

It is preferable to subject the polarizing layer to a treatment to immobilize the dichromic pigment so as to enhance the film strength and film stability. It is desirable to conduct the immobilization treatment after the above-mentioned water-insolubilization treatment. By the immobilization treatment, the state of orientation of the dichromic pigment can be immobilized in the polarizing layer.

### (Silane coupling agent treatment)

It is preferable to conduct the immobilization treatment preferably by subjecting the surface of the polarizing layer to a silane coupling agent treatment. The silane coupling agent treatment can be conducted by, for example, applying a silane coupling agent as a solution having a concentration of about 1 to 15% by mass, preferably about 1 to 10% by mass onto the surface of the polarizing layer. The solvent used for preparing the above-mentioned solution is preferably an aqueous solvent, more preferably water or a mixed solvent of water and an alcohol (methanol, ethanol or the like) . In the present invention and the present specification, the aqueous solvent refers to a solvent containing at least water. The above-mentioned solution can be applied by a known means such as a dipping process, a spin coating process or a spraying process. The immobilization effect can further be enhanced by leaving the element including the lens substrate and the polarizing layer in a heating furnace or the like for a predetermined period during the immobilization treatment. The temperature of the atmosphere in this furnace and the time for leaving can be determined depending on the kind of the silane coupling agent used, and the temperature is generally room temperature to 120°C, and the time is about 5 minutes to 3 hours.

As the silane coupling agent, epoxysilanes (epoxy group-containing silane coupling agents) and aminosilanes (amino group-containing silane coupling agents) are preferable. In view of the immobilization effect, it is preferable to conduct the silane coupling agent treatment (epoxy silane treatment) by applying at least an epoxy group-containing silane coupling agent solution onto the surface of the polarizing layer, and it is further preferable to apply an amino group-containing silane coupling agent (aminosilane treatment), and subsequently conduct an epoxysilane treatment. This is because it is conjectured that an aminosilane enters into the molecules of the monoaxially-oriented dichromic pigment more easily than an epoxysilane does, due to its molecular structure.

The silane coupling agent generally has a structure represented by R-Si(OR')₃ (the R's that are plurally present may be the same or different), and the epoxysilane (epoxy group-containing silane coupling agent) has an epoxy group at the functional group represented by the above-mentioned R. The epoxy group is generally linked to Si via a bivalent linking group. As the bivalent linking group, the linking groups included in the specific example compounds mentioned below can be exemplified.

On the other hand, the functional group represented by the above-mentioned R' is generally an alkyl group, and is hydrolyzed in an aqueous solvent to form silanol (Si-OH) . The carbon number of the alkyl group represented by the above-mentioned R' is, for example, 1 to 10, preferably 1 to 3.

Specific examples of the epoxysilane can include glycidoxy group-containing trialkoxysilanes such as γ-glycidoxypropyltrimethoxysilane (y-GPS) and γ-glycidoxypropylmethyldiethoxysilane, and epoxyalkylalkoxysilanes such as β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane and δ-(3,4-epoxycyclohexyl)butyltriethoxysilane.

The aminosilane (amino group-containing silane coupling agent) contains an amino group in the functional group represented by the above-mentioned R, and the details of the above-mentioned structural formula relating to the aminosilane are as mentioned above for the epoxysilane, except that R contains an amino group.

Specific examples of the aminosilane can include glycidoxy group-containing trialkoxysilanes such as γ-glycidoxypropyltrimethoxysilane (y-GPS) and γ-glycidoxypropylmethyldiethoxysilane, epoxyalkylalkoxysilanes such as β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane and δ-(3,4-epoxycyclohexyl)butyltriethoxysilane, and amino group-containing alkoxysilanes such as N- (β-aminoethyl) -γ-aminopropyltrimethoxysilane, N- (β-aminoethyl) -γ-aminopropylmethyldimethoxysilane, γ-aminopropylmethyldimethoxysilane, γ-aminopropylmethyldiethoxysilane, γ-aminopropyltrimethoxysilane, γ-aminopropyltriethoxysilane, N- (β-aminoethyl) -γ-aminopropylmethyldimethoxysilane and N- (β-aminoethyl) -γ-aminopropylmethyldiethoxysilane.

The silane coupling agents may be used singly by one kind, or in combination of two or more kinds. In addition, it is also possible to rinse the surface of the polarizing layer with pure water, deionized water or the like after the application of the silane coupling agent to thereby remove the silane coupling agent that has excessively adhered to the outermost surface. It is also possible to subject the element including the polarizing layer after the silane coupling agent has been applied to a heating treatment. The heating treatment can be conducted, for example, by disposing the above-mentioned element in a heating furnace with the temperature in the furnace of 45 to 145°C, preferably 50 to 90°C.

### <Intermediate layer>

In the spectacle lens of the present invention, the polarizing layer explained above is laminated with the photochromic layer via an intermediate layer. The intermediate layer is preferably a layer containing at least a resin, and the resin is preferably an aqueous resin. In the present invention and the present specification, the aqueous resin refers to a resin having a property such that an aqueous coating solution containing at least this resin and an aqueous solvent (an aqueous resin composition) is solidified upon drying. Furthermore, the layer formed by the solidification of the aqueous resin composition by drying is an aqueous resin layer.

The aqueous solvent contained in the aqueous resin composition is, for example, water or a mixed solvent of water and a polar solvent or the like, preferably water. Furthermore, the solid content concentration of the aqueous resin composition is preferably 1 to 62% by mass, more preferably 5 to 38% by mass in view of liquid stability and film forming property. The aqueous resin composition can further contain additives such as an antioxidant, a dispersant and a plasticizer as necessary besides the aqueous resin. Furthermore, a commercially available aqueous resin composition may be diluted with a solvent such as water, an alcohol or propylene glycol monomethyl ether, and used.

The aqueous resin composition can contain the aqueous resin in a state that the aqueous resin is dissolved in an aqueous solvent or dispersed as microparticles (preferably colloidal particles). Specifically, it is desirable that the aqueous resin composition is a dispersion liquid in which the aqueous resin is dispersed in the form of microparticles in an aqueous solvent (preferably water), and the particle size of the aqueous resin in this case is preferably 0.3 µm or less in view of the dispersion stability of the composition. Furthermore, the pH of the aqueous resin composition is preferably about 5.5 to 9.0 at 25°C in view of stability, and the viscosity at 25°C is preferably 5 to 500 mPa·s, more preferably 10 to 50 mPa·s from the point of application adequacy.

Examples of the aqueous resin include aqueous polyurethane resins, aqueous acrylic resins, aqueous epoxy resins and the like, and from the viewpoint of effective prevention or decreasing of peeling between the polarizing layer and the photochromic layer, an aqueous polyurethane resin is preferable. That is, the intermediate layer is preferably an aqueous polyurethane resin layer. The aqueous resin composition containing the aqueous polyurethane resin can be prepared, for example, by subjecting a high molecular weight polyol compound and an organic polyisocyanate compound, together with a chain extender as necessary, to an urethanation reaction in a solvent that is inert to the reaction and has high affinity to water to form a prepolymer, neutralizing this prepolymer, and dispersing the prepolymer in an aqueous solvent containing a chain extender to polymerize the prepolymer. For such aqueous resin composition and the preparation method thereof, for example, JP 3588375 B; paragraphs 0009 to 0013, JP 8-34897 A; paragraphs 0012 to 0021, JP 11-92653 A; paragraphs 0010 to 0033, JP 11-92655 A, paragraphs 0010 to 0033, and the like can be referred to. The whole descriptions of the above-mentioned publications are herein specifically incorporated by reference as disclosures. Alternatively, as the aqueous resin composition, a commercially available product that is commercially available as an aqueous urethane can be used directly or by diluting with an aqueous solvent as necessary. As the commercially available aqueous polyurethanes, for example, "ADEKA BON-TIGHTER" series manufactured by Asahi Denka Kogyo K. K., "OLESTER" series manufactured by Mitsui Toatsu Chemicals, Inc., "Bondic" series and "Hydran" series manufactured by Dainippon Ink and Chemicals , Inc., "Impranil" series manufactured by Bayer AG, "Soflanate" series manufactured by Japan Soflan, "Poiz" series manufactured by Kao Corporation, "SANPRENE" series manufactured by Sanyo Chemical Industries, Ltd., "Aizerax" series manufactured by Hodogaya Chemical Co. Ltd., "SuperFlex" series manufactured by DKS Co. Ltd., and "Neorez" series manufactured by Zeneca can be used.

As the aqueous resin composition containing the aqueous polyurethane resin, those obtained by dispersing a terminal isocyanate prepolymer having a polyol such as a polyester polyol, a polyether polyol or a polycarbonate polyol as a basic backbone, and having anionic groups such as carboxyl groups and sulfone groups in an aqueous solvent are preferable.

By applying the aqueous resin composition explained above onto the surface of the polarizing layer, preferably after the silane coupling agent treatment, and drying the aqueous resin composition, an aqueous resin layer can be formed as an intermediate layer on the polarizing layer. As the application method, a known application process such as a dip process, a spin coating process or the like can be used. The conditions for the application may be suitably preset so that an intermediate layer having a desired thickness can be formed. Irrespective of whether or not the intermediate layer is an aqueous resin layer, the thickness of the intermediate layer is preferably in the range of 5 to 20 µm, more preferably in the range of 7 to 10 µm, from the viewpoint that the peeling between the polarizing layer and the photochromic layer is prevented or decreased effectively. The intermediate layer may be only a single layer, or two or more layers having different compositions. In the case when two or more layers are disposed between the polarizing layer and the photochromic layer, the thickness of the intermediate layer refers to the total thickness of the two or more layers. In addition, before the application of the aqueous resin composition, the surface of the polarizing layer on which the resin composition is to be applied can be subjected to one or more known surface treatments such as chemical treatments with acids, alkalis, various organic solvents and the like, physical treatments with plasma, ultraviolet ray, ozone and the like, and detergent treatments using various detergents.

After the application of the aqueous resin composition, an aqueous resin layer can be formed as an intermediate layer by drying this composition. The above-mentioned drying can be conducted by, for example, by disposing an element including the polarizing layer on which the aqueous resin composition has been applied in an atmosphere at room temperature to 100°C for 5 minutes to 24 hours. The room temperature refers to an atmospheric temperature with no temperature control such as heating or cooling, and is generally about 15 to 25°C, but is not limited to the above-mentioned range since it can vary depending on the weather and season.

The aqueous resin layer has been explained as a preferable aspect of the intermediate layer, but the intermediate layer may be, for example, a cured layer formed by subjecting a curable composition to a curing treatment.

### <Photochromic layer>

### (Photochromic pigment)

Secondly, the photochromic layer will be explained. In the above-mentioned spectacle lens, the photochromic layer is laminated onto the polarizing layer via the intermediate layer. The photochromic layer contains at least a photochromic pigment. As the photochromic pigment, for example, photochromic compounds such as fulgimide compounds, spirooxazine compounds and chromene compounds can be used without any limitation. For the details thereof, paragraphs 0076 to 0088 of WO2008/001578 A1 (the whole description thereof is herein specifically incorporated by reference as a disclosure) can be referred to. The photochromic layer can be formed, preferably by applying a curable composition containing a photochromic pigment (a curable composition for forming a photochromic layer) onto an intermediate layer, and subjecting the composition to a curing treatment. The curable composition refers to a composition containing at least a curable compound. The curable composition for forming a photochromic layer can contain preferably 0.01 to 20 parts by mass of, more preferably 0.1 to 10 parts by mass of the photochromic pigment with respect to 100 parts by mass of the curable compound.

### (Curable compound)

The curable compound may be any compound having a property that the compound is cured (polymerized) by a curing treatment such as irradiation with light or heating. In view of easiness of obtainment, fine curability and the like, an acrylic compound is preferable, and a compound having a radical polymerizable group selected from the group consisting of a (meth)acryloyl group and a (meth)acryloyloxy group is more preferable. The (meth)acryloyl represents both acryloyl and methacryloyl, and (meth)acryloyloxy represents both acryloyloxy and methacryloyloxy. For the details thereof, paragraphs 0050 to 0075 of WO2008/001578A1 can be referred to.

### (Polymerization initiator)

The curable composition for forming a photochromic layer generally contains a polymerization initiator. The polymerization initiator can be suitably selected from known photopolymerization initiators and thermopolymerization initiators depending on the polymerization method. For the details thereof, paragraphs 0089 to 0090 of WO2008/001578A1 can be referred to.

### (Additives)

For improving the durability of the photochromic pigment, improving a color developing velocity, improving a color fading velocity and improving moldability, the curable composition for forming a photochromic layer may further contain a surfactant, an antioxidant, a radical scavenger, a ultraviolet stabilizer, a ultraviolet absorber, a mold releasing agent, an anti-coloring agent, an antistatic agent, a fluorescence dye, a dye, a pigment, flavor material and a plasticizer. As these additives, known compounds can be used without any limitation. For the details thereof, paragraphs 0092 to 0097 of WO2008/001578A1 can be referred to.

As an example of the preferable additive, a piperidine ring-containing compound can be exemplified. The piperidine ring-containing compound is an additive that can improve the durability of the photochromic layer by preventing the oxidation of the photochromic layer. From the viewpoint of further improvement of the durability of the piperidine ring-containing compound and the photochromic layer, it is more preferable to use a hindered amine. The hindered amine herein contains the following structure in the molecule: 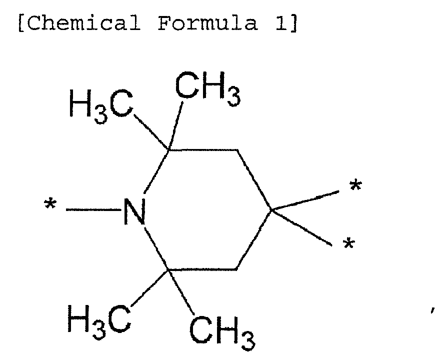 and binds to an atom such as a hydrogen atom or other structure at the position represented by *. The hindered amine may also be a polymer that contains the above-mentioned structure at one or both of the main chain and the side chains. Furthermore, irrespective of whether or not the piperidine ring-containing compound is a hindered amine, the piperidine ring-containing compound may be a polymer containing piperidine ring(s) at one or both of the main chain and the side chains. Furthermore, the piperidine ring to be incorporated is optionally substituted with substituents such as alkyl groups as in the above-mentioned structure.

The molecular weight of the piperidine ring-containing compound is not specifically limited, and can be, for example, 4,000 or less. In an aspect, the molecular weight of the piperidine ring-containing compound can be lower than 1,000, and in an aspect, the molecular weight can be 1,000 or more. Furthermore, the molecular weight of the piperidine ring-containing compound may be, for example, 100 or more, but may also be lower than 100. A molecular weight for a polymer (multimer) refers to a weight average molecular weight obtained in terms of polystyrene by a gel permeation chromatography (GPC), or refers to that the molecular weight distribution is within the above-mentioned range. Furthermore, the average molecular weight described in the present specification refers to a weight average molecular weight obtained as mentioned above.

The piperidine ring-containing compound can be incorporated in the curable composition for forming a photochromic layer by, for example, 0.001 to 20 parts by mass, preferably 0.1 to 10 parts by mass, more preferably 1 to 5 parts by mass with respect to 100 parts by mass of the curable compound. The piperidine ring-containing compound may be added to only the curable composition for forming a photochromic layer, or may be added to a composition for forming a functional layer mentioned below, without adding to the curable composition for forming a photochromic layer, or may be added to the two compositions.

The photochromic layer can be formed by applying the curable composition for forming a photochromic layer containing the components explained above onto the surface of the intermediate layer, and subjecting this composition to a curing treatment. The method for preparing the curable composition for forming a photochromic layer is not specifically limited, and can be conducted by weighing the respective components at predetermined amounts and mixing the components. The order of addition of the respective components is not specifically limited, and all components may be added at the same time, or only the curable compound may be mixed in advance and the other components may be added and mixed immediately before the application. The curable composition for forming a photochromic layer has a viscosity at 25°C of preferably 20 to 500 mPa·s, more preferably 50 to 300 mPa·s, specifically preferably 60 to 200 mPa·s. By setting the viscosity to this range, the curable composition for forming a photochromic layer is easily applied, and thus a photochromic film having a desired thickness can be easily obtained. The curable composition for forming a photochromic layer can be applied by a known application method such as a spin coating process.

After the curable composition for forming a photochromic layer has been applied onto the intermediate layer, a photochromic layer can be formed by subjecting this composition to a curing treatment depending on the kind of the included curable compound (irradiation with light, heating or the like) . The curing treatment can be conducted by a known method. The thickness of the photochromic layer is preferably 10 µm or more, more preferably 20 to 60 µm from the viewpoint of fine expression of photochromic property.

### <Functional layer>

The spectacle lens of the present invention may have the above-mentioned photochromic layer or polarizing layer as a re-surface layer on the object side surface, but it is preferable to further have one or more functional layer (s) on the layer that is farther from the lens substrate of the photochromic layer and the polarizing layer (i.e., positioned at the side of an object) . It is also possible to dispose two or more of such functional layers. Examples of the functional layer that is optionally disposed can include various functional layers such as known hard coat layer, water-repelling layer and antireflective layer (multilayer antireflective film). As an example, the hard coat layer is explained below.

It is preferable that the hard coat layer has a thickness in the range of 0.5 to 10 µm from the viewpoint of achieving improvement of the durability and optical property of the spectacle lens at the same time. As the hard coat layer, a hard coat layer containing an organic silicon compound and metal oxide particles is preferable from the viewpoint of improvement of the durability of the spectacle lens. As an example of the composition for forming a functional layer capable of forming such hard coat layer (hard coat composition), those described in JP 63-10640 A (the whole description thereof is herein specifically incorporated by reference as a disclosure) can be exemplified.

Furthermore, as the preferable aspect of the organic silicon compound, an organic silicon compound represented by the following general formula (I) or a hydrolysate thereof can also be exemplified.

(R¹)ₐ(R³)_{b}Si(OR²)_{4-(a+b)} ... (I)

In the general formula (I), R¹ represents an organic group having a glycidoxy group, an epoxy group, a vinyl group, a methacryloxy group, an acryloxy group, a mercapto group, an amino group, a phenyl group or the like, R² represents an alkyl group having 1 to 4 carbon atom(s), an acyl group having 1 to 4 carbon atom(s)or an aryl group having 6 to 10 carbon atoms, R³ represents an alkyl group having 1 to 6 carbon atom(s) or an aryl group having 6 to 10 carbon atoms, and a and b each represents 0 or 1.

The alkyl group having 1 to 4 carbon atom(s)represented by R² is a straight chain or branched alkyl group, and specific examples include a methyl group, an ethyl group, a propyl group, a butyl group and the like.

Examples of the acyl group having 1 to 4 carbon atom(s) represented by R² include an acetyl group, a propionyl group, an oleyl group, a benzoyl group and the like.

Examples of the aryl group having 6 to 10 carbon atoms represented by R² include a phenyl group, a xylyl group a tolyl group and the like.

The alkyl group having 1 to 6 carbon atom(s)represented by R³ is a straight chain or branched alkyl group, and specific examples include a methyl group, an ethyl group, a propyl group, a butyl group, a pentyl group, a hexyl group and the like.

Examples of the aryl group having 6 to 10 carbon atoms represented by R³ include a phenyl group, a xylyl group, a tolyl group and the like.

Specific examples of the compound represented by the general formula (I) include those described in paragraph 0073 of JP 2007-077327 A (the whole description thereof is herein specifically incorporated by reference as a disclosure). Since the organic silicon compound represented by the general formula (I) has a curable group, by conducting a curing treatment after the application, a hard coat layer can be formed as a cured layer.

The metal oxide particles contained in the above-mentioned hard coat layer may contribute to adjustment of the refractive index and improvement of the hardness of the hard coat layer. Specific examples include particles of tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO) and antimony oxide (Sb₂O₅), and one kind or two or more kinds of metal oxide particles can be used in combination. The particle size of the metal oxide particles is preferably in the range of 5 to 30 nm from the viewpoint of achieving scratch resistance and optical property at the same time. For a similar reason, the content of the metal oxide particles in the hard coat layer can be suitably preset with consideration for refractive index and hardness, and is generally about 5 to 80% by mass per the solid content of the hard coat composition. Furthermore, the above-mentioned metal oxide particles are preferably colloid particles from the viewpoint of dispersibility in the hard coat layer.

The hard coat layer can be formed by applying a hard coat composition prepared by mixing the above-mentioned components, and optional components such as an organic solvent and a surfactant (levelling agent) as necessary on a surface on which the composition is applied, and subjecting the composition to a curing treatment (light irradiation, heating or the like) depending on the curable group. In an aspect in which the hard coat composition is cured by heating, the heating temperature (the atmospheric temperature at which the heating treatment is conducted) is preferably lower than 100°C, preferably 95°C or less. The heating temperature is for example 80°C or more, and may be preset curable depending on the kind of the compound, and may be lower than 80°C. As the means for applying the hard coat composition, a generally-conducted method such as a dipping process, a spin coating process or a spraying process can be applied.

### [Spectacles]

A further aspect of the present invention can provide spectacles having the above-mentioned spectacle lenses of the present invention, and a frame to which these spectacle lenses have been attached. The spectacle lenses are as specifically explained above. The other constitutions of the spectacles are not specifically limited, and known technologies can be applied.

### Examples

The present invention will further be explained with Examples. However, the present invention is not limited to the aspects shown in Examples.

### [Example 1]

### Preparation of polarizing lens

### (1) Formation of array layer

A polythiourethane lens having a curved-form (manufactured by HOYA, trade name EYAS, center thickness: 2.0 mm in thickness, diameter: 75 mm, surface curve of convex surface: (average value) about +0.8) was used as a lens substrate. A hard coat composition was prepared by the method described in the following (6), applied onto the convex surface of the above-mentioned lens substrate by a spin coating process, and subjected to a curing treatment by heating at a heating temperature of 90°C for 120 minutes, whereby a hard coat layer having a thickness of 2 µm was prepared.

An SiO₂ film having a thickness of about 0.2 µm was formed on the above-mentioned hard coat layer by a vacuum deposition process.

The formed SiO₂ film was subjected to a monoaxial polishing treatment for 30 seconds by using a polisher-containing urethane foam (polisher: Al₂O₃ particles manufactured by Fujimi Inc., trade name: POLIPLA203A, average particle size: 0.8 µm, urethane foam: having approximately the same shape as the curvature of the above-mentioned lens convex surface) under conditions of a rotation number of 350 rpm and a polishing pressure of 50 g/cm². The lens that had undergone the polish treatment was washed with pure water and dried. By this way, an array layer was formed on the convex surface of the lens substrate with a hard coat layer.

### (2) Formation of polarizing layer

### (2-1) Application of aqueous coating solution for forming polarizing layer

After the above-mentioned drying, 2 to 3 g of an aqueous solution of about 5% by mass of a water-soluble dichromic pigment (manufactured by Sterling Optics Inc., trade name: Varilight solution 2S) was applied by a spin coating process onto the polished surface. The application by the spin coating process was conducted by feeding the aqueous coating solution for forming a polarizing layer at a rotation number of 300 rpm, keeping for 8 seconds, then keeping at a rotation number of 400 rpm for 45 seconds, and further keeping at 1,000 rpm for 12 seconds.

### (2-2) Immobilization treatment

Subsequently, an aqueous solution (pH 3.5) having an iron chloride concentration of 0.15 M and a calcium hydroxide concentration of 0.2 M was prepared, and the lens obtained above was immersed in this aqueous solution for approximately 30 seconds, then taken out, and sufficiently washed with pure water. By this step, the pigment, which was water-soluble, is converted to water-insoluble (a water-insolubilization treatment).

### (2-3) Treatment with silane coupling agent

After the above-mentioned (2), the lens was immersed in an aqueous solution of 10% by mass of γ-aminopropyltriethoxysilane for 15 minutes, then washed with pure water three times, subjected to a heating treatment in a heating furnace (temperature in furnace: 85°C) for 30 minutes, taken out of the heating furnace, and cooled to room temperature.

After the above-mentioned cooling, the lens was immersed in an aqueous solution of 2% by mass of γ-glycidoxypropyltrimethoxysilane for 30 minutes, and subjected to a heating treatment in a heating furnace (temperature in furnace: 60°C) for 30 minutes. After the heating treatment, the lens was taken out of the heating furnace and cooled to room temperature.

After the above-mentioned silane coupling agent treatment, the thickness of the formed polarizing layer was about 1 µm.

### (3) Formation of aqueous polyurethane resin layer (intermediate layer)

An aqueous dispersion liquid of a polyurethane in which acrylic groups had been introduced into a polyurethane backbone (polycarbonate polyol-based polyurethane emulsion, viscosity: 100 mPa·s, solid content concentration: 38% by mass) as an aqueous resin composition was applied onto the surface of the polarizing layer obtained in the above-mentioned (2) by a spin coating process, and subjected to an air drying treatment under an atmosphere at a temperature of 25°C and a relative humidity of 50% for 15 minutes, whereby an aqueous polyurethane resin layer having a thickness of about 7 µm was prepared.

### (4) Preparation of curable composition for forming photochromic layer

In a plastic container, a radical polymerizable composition containing 20 parts by mass of trimethylolpropane trimethacrylate, 35 parts by mass of a BPE oligomer (2,2-bis(4-methacryloyloxypolyethoxyphenyl)propane), 10 parts by mass of EB6A (polyester oligomer hexaacrylate), 10 parts by mass of a polyethylene glycol diacrylate having an average molecular weight of 532, and 10 parts by mass of glycidyl methacrylate was prepared. 3 parts by mass of chromene 1 mentioned below as a photochromic pigment, 5 parts by mass of a piperidine ring-containing compound (a hindered amine (Sanol LS765 manufactured by Sankyo (bis(1,2,2,6,6-pentamethyl-4-piperidyl)sebacate, methyl(1,2,2,6,6-pentamethyl-4-piperidyl)sebacate), average molecular weight: 467)), 0.6 parts by mass of CGI-1870 (manufactured by BASF) as a ultraviolet polymerization initiator were added to 100 parts by mass of this radical polymerizable composition and sufficiently mixed under stirring to give a composition, and 6 parts by mass of γ-methacryloyloxypropyltrimethoxysilane (KBM503 manufactured by Shin-Etsu Chemical Industrial) was added dropwise to the composition under stirring. Thereafter the composition was defoamed in a planetary stirring defoaming apparatus for 2 minutes to give a curable composition for forming a photochromic layer.

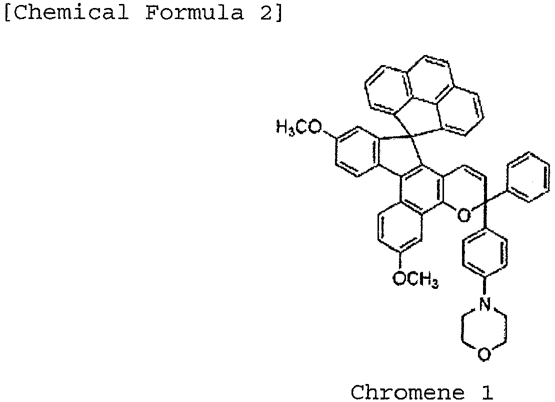

### (5) Formation of photochromic layer

The curable composition for forming a photochromic layer prepared in (4) was applied onto the aqueous polyurethane resin layer formed in the above-mentioned (3) by a spin coating process. This lens was then irradiated with ultraviolet lay by a UV lamp (D valve) at a wavelength of 405 nm at an integral light of 3,240 mJ/cm² (180 mW/cm²) for 3 minutes in a nitrogen atmosphere (oxygen concentration: 500 ppm or less), and further subjected to a curing treatment at a heating temperature of 80°C for 150 minutes, whereby a photochromic layer having a thickness of about 40 µm was formed.

### (6) Preparation of hard coat composition

17 parts by mass of γ-glycidoxypropyltrimethoxysilane, 30 parts by mass of methanol, and 28 parts by mass of a water-dispersed colloidal silica (solid content: 40% by mass, average particle diameter: 15 nm) were added to a glass container equipped with a magnetic stirrer, sufficiently mixed, and stirred at a liquid temperature of 5°C for 24 hours. Subsequently, 15 parts by mass of propylene glycol monomethyl ether, 0.05 parts by mass of a silicone-based surfactant and 1.5 parts by mass of aluminum acetyl acetonate as a curing agent were added, and the mixture was sufficiently stirred and filtered, whereby a hard coat composition was prepared.

### (7) Formation of hard coat layer

Application was conducted by using the hard coat composition prepared in the above-mentioned (6) onto the photochromic layer formed in the above-mentioned (5) by a dipping process (drawing velocity: 20 cm/min), and the hard coat composition was subjected to a curing treatment by heating at a heating temperature of 90°C for 120 minutes to form a hard coat layer having a thickness of 3 µm.

By the above-mentioned steps, a spectacle lens having, on a lens substrate, a hard coat layer, an array layer, a polarizing layer (treated with a silane coupling agent), an aqueous polyurethane resin layer, a photochromic layer and a hard coat layer in this order was obtained.

### [Example 2]

A spectacle lens was obtained according to a similar method to that of Example 1, except that the hindered amine was excluded from the components of the curable composition for forming a photochromic layer.

### [Comparative Example 1]

A spectacle lens was obtained according to a similar method to that of Example 1, except that a photochromic layer was directly formed on a polarizing layer without forming an aqueous polyurethane resin.

### [Comparative Example 2]

A spectacle lens was obtained according to a similar method to that of Example 2, except that a photochromic layer was directly formed on a polarizing layer without forming an aqueous polyurethane resin.

### Evaluation methods

### (1) Evaluation of initial adhesiveness

The adhesiveness was evaluated by the following method for the spectacle lens immediately after the preparation by the above-mentioned method.

### <Method for evaluating adhesiveness>

The convex surface side of each of the spectacle lenses of Examples and Comparative Examples was cross-cut to form 100 grids at 1.5 mm intervals, an adhesive tape (cellophane tape manufactured by Nichiban) was strongly attached to this cross-cut portion, and the number of the grids at which the adhesive tape had been peeled off among the 100 grids after rapid peeling of the adhesive tape was investigated. The criteria for the judgment are as follows.

### (Evaluation criteria)

○ Number of grids where peeling occurred: 0 to 2/100
Δ Number of grids where peeling occurred: 3 to 5/100
× Number of grids where peeling occurred: 6 or more/100

### (2) Adhesiveness after hot water resistance test

For each of the spectacle lenses of Examples and Comparative Examples, the spectacle lens was immersed in hot water at 50°C for 24 hours and air-dried, and the adhesiveness of the spectacle lens was then evaluated by the above-mentioned method.

### (3) Adhesiveness after humidity resistance test

For each of the spectacle lenses of Examples and Comparative Examples, the spectacle lens was kept under an environment at a temperature of 40°C and a relative humidity of 90% for 168 hours), and the adhesiveness of the spectacle lens was then evaluated by the above-mentioned method.

### (4) Evaluation of presence or absence of fogging

For each of the spectacle lenses of Examples and Comparative Examples, the spectacle lens was stored under an environment at a temperature of 50°C for 72 hours, and the presence or absence of fogging of the spectacle lens was then evaluated by the following method.

The haze value of the spectacle lens was measured by a haze meter MH-150 manufactured by Murakami Color Research Laboratory Co., Ltd. In the case when the haze value is 0.3% or less, fogging is not confirmed by visual observation, and thus the spectacle lens can be judged to have an optical property applicable as a spectacle lens. Therefore, the presence or absence of fogging was evaluated according to the following evaluation criteria.

### (Evaluation criteria)

○ haze value: 0.3 or less
× haze value: greater than 0.3

The above-mentioned results are shown in Table 1.

**[Table 1]**

| | Adhesiveness immediately after preparation | Adhesiveness after hot water resistance test | Adhesiveness after moisture resistance test | Fogging |
|---|---|---|---|---|
| Example 1 | ○ | ○ | ○ | ○ |
| Example 2 | ○ | ○ | ○ | ○ |
| Comparative Example 1 | × | × | × | × |
| Comparative Example 2 | × | × | × | ○ |

The following points were confirmed from the results shown in Table 1.
(1) It was confirmed from the comparison between Examples 1 and 2 and Comparative Examples 1 and 2 that occurrence of peeling between the polarizing layer and the photochromic layer can be prevented by disposing the intermediate layer between the polarizing layer and the photochromic layer, and thus the adhesiveness can be enhanced.
(2) When the spectacle lens of Comparative Example 1 was observed at the cross-sectional surface under a microscope, it was confirmed that fogging (whiteness) occurred in the array layer. On the other hand, fogging did not occur in Comparative Example 2. Therefore, it is considered that the presence or absence of the piperidine ring compound, which is the difference between Comparative Examples 1 and 2, affected the presence or absence of the occurrence of fogging. The reason why fogging occurred in Comparative Example 1 was conjectured that the piperidine ring compound exuded from the photochromic layer and reached the array layer, whereby the silicon oxide (SiO₂) contained in the array layer was denaturized. Since fogging did not occur in Example 1, wherein the photochromic layer contained a piperidine ring-containing compound and an intermediate layer was disposed between the photochromic layer and the polarizing layer, it is considered that the intermediate layer contributed to the suppression of the arrival of the piperidine ring compound at the array layer.

An aspect of the present invention is useful in the technical field of spectacles and spectacle lenses.

It should be considered that the embodiments disclosed herein are exemplification and not limitative in all points. The scope of the present invention is indicated by not the above-mentioned explanation but the claims and intended to include all modifications within the meanings and scopes equivalent to those of the claims.

## Claims

1. A spectacle lens comprising, on at least one side of a lens substrate:
a polarizing layer containing a dichromic pigment; and
a photochromic layer containing a photochromic pigment, via an intermediate layer.

2. The spectacle lens according to claim 1, wherein the intermediate layer is an aqueous resin layer.

3. The spectacle lens according to claim 2, wherein the aqueous resin layer is an aqueous polyurethane resin layer.

4. The spectacle lens according to any one of claims 1 to 3, comprising, on the lens substrate:
the polarizing layer;
the intermediate layer; and
the photochromic layer, in this order from the side of the lens substrate.

5. The spectacle lens according to claim 4, further comprising
a functional layer on the side opposite to the intermediate layer of the photochromic layer.

6. The spectacle lens according to claim 4 or 5, further comprising
an array layer containing a silicon oxide between the lens substrate and the polarizing layer.

7. The spectacle lens according to claim 5 or 6, wherein at least one of the photochromic layer and the functional layer contains a piperidine ring-containing compound.

8. The spectacle lens according to claim 7, wherein the piperidine ring-containing compound is a hindered amine.

9. The spectacle lens according to any one of claims 1 to 8, wherein the surface at the side of the intermediate layer of the polarizing layer is a surface that has undergone a treatment with a silane coupling agent.

10. The spectacle lens according to claim 9, wherein the treatment with a silane coupling agent is at least one treatment selected from the group consisting of an epoxysilane treatment and an aminosilane treatment.

11. The spectacle lens according to any one of claims 1 to 10, wherein at least one surface of the lens substrate is a convex surface.

12. Spectacles comprising:
spectacle lenses according to any one of claims 1 to 11; and
a frame to which the spectacle lenses have been attached.
